# EUROPÄISCHE PATENTSCHRIFT

(11) **EP 2 853 492 B1**
(45) Veröffentlichungstag und Bekanntmachung des Hinweises auf die Patenterteilung: **25.04.2018**
(21) Anmeldenummer: 14181737.9
(22) Anmeldetag: 21.08.2014
(51) Int. Cl.: B64D 11/06

(54) **Fluggastsitz**
Aircraft passenger seat
Siège de passager aérien

(30) Priorität: 28.08.2013 DE 102013014226
(43) Veröffentlichungstag der Anmeldung: 01.04.2015
(73) Patentinhaber: ZIM Flugsitz GmbH, 88677 Markdorf (DE)
(72) Erfinder: Kalsberger, Peter, 1180 Wien (AT); Kim, Zie-Na, 80337 München (DE); Prykhodko, Maksym, 88045 Friedrichshafen (DE)
(74) Vertreter: Otten, Roth, Dobler & Partner mbB Patentanwälte

(56) Entgegenhaltungen:
- DE-A1-102009 052 593
- DE-U1- 8 600 508
- DE-U1-202012 105 089
- US-A1- 2009 200 840
- US-A1- 2012 091 764
- US-A1- 2013 076 082

## Beschreibung

Die Erfindung betrifft einen Fluggastsitz nach dem Oberbegriff des Anspruchs 1.

### Stand der Technik

Fluggastsitze für Flugzeuge sind bereits in vielfältigen Ausführungsformen Stand der Technik. In der Regel ist an einem Fluggastsitz über eine Tischanbindungsstruktur ein Klapptisch klappbar angeordnet (siehe z.B. Dokument DE 20 2012 105089 U1). Die Tischanbindungsstruktur umfasst zwei Tischarme, die seitlich und außen an einem Sitzgestell bzw. einer Stützstruktur einer Rückenlehne des Fluggastsitzes angeordnet sind. Häufig lässt sich der Klapptisch an der Tischanbindungsstruktur auch noch transversal verschieben, damit ein Fluggast den Klapptisch noch näher an sich heranziehen kann, wenn er ausgeklappt ist.

### Aufgabe und Vorteile der Erfindung

Der Erfindung liegt die Aufgabe zugrunde, einen Fluggastsitz mit Klapptisch ergonomischer auszugestalten.
Diese Aufgabe wird durch die Merkmale des Anspruchs 1 gelöst. In den abhängigen Ansprüchen sind vorteilhafte und zweckmäßige Weiterführungen der Erfindung angegeben.

Die Erfindung geht von einem Fluggastsitz mit einem Sitzboden und einer Rückenlehne aus, die eine Stützstruktur aufweist, sowie mit einem Gestell, das zur Befestigung an einem Boden in einer Flugkabine vorgesehen ist und mit einem Klapptisch, der mit einer Tischanbindungsstruktur klappbar am Fluggastsitz angeordnet ist. Für den Klapptisch mit Tischanbindungsstruktur gibt es damit einen eingeklappten und ausgeklappten Zustand am Fluggastsitz. Im eingeklappten Zustand liegt die Tischanbindungsstruktur und der Klapptisch am verbleibenden Fluggastsitz an, während, im ausgeklappten Zustand die Tischanbindungsstruktur zumindest teilweise und der Klapptisch an der Tischanbindungsstruktur vom verbleibenden Fluggastsitz abstehen.

Der Kern der Erfindung liegt nun darin, dass die Tischanbindungsstruktur innerhalb der Breite der Rückenlehne angeordnet ist.

Dadurch wird es möglich, den Tisch in die Tiefe der Rückenlehne, das heißt, wenn man seitlich auf die Rückenlehne schaut, innerhalb einer Projektion der seitlichen Rückenlehnenberandung, vorzugsweise vollständig "verschwinden" zu lassen. In diesem Fall bildet ein Rückenlehnenrahmen der Stützstruktur der Rückenlehne und/oder des Gestells den seitlichen Berandungsbereich. Über diesen seitlichen Begrenzungsbereich, insbesondere links und rechts, wenn man von der Rückseite auf die Rückenlehne schaut, stehen dann keine Abschnitte der Tischanbindungsstruktur und vorzugsweise auch keine Abschnitte des Klapptisches über.

Damit wird zunächst im seitlichen Bereich eines Fluggastsitzes Platz gespart.

In einer besonders bevorzugten Ausgestaltung der Erfindung ist die Tischanbindungsstruktur innerhalb der Tiefe bzw. der Stärke der Rückenlehne angeordnet. Damit kann der Klapptisch, der im Wesentlichen aus einer Tischplatte besteht, und die Tischanbindungsstruktur vollständig in der Tiefe bzw. der Stärke der Rückenlehne untergebracht werden, wenn Anbindungsstruktur und Klapptisch eingeklappt sind. Damit kann der Fluggastsitz mit Tischanbindungsstruktur und Klapptisch kompakter gebaut werden, wodurch ohne Reduzierung der Bewegungsfreiheit für einen Fluggast der Sitzabstand verkleinert oder bei gleichbleibendem Sitzabstand eine Vergrößerung der Bewegungsfreiheit des so genannten "living space" stattfindet. Durch Sitz-Spezifikationen werden Vorgaben bei der Rückenlehnenstärke gemacht, wobei es Komfortbereiche A bis D gibt. Mit Rückenlehnenstärke ist die Tiefe einer Rückenlehne gemeint, wenn man die Rückenlehne von der Rückseite oder von der Anlagefläche durchdringen würde. Mit der erfindungsgemäßen Vorgehensweise wird es möglich, die Tischanbindungsstruktur unmittelbar in die Rückenlehnenstruktur zu integrieren, um "living space" zu gewinnen bzw. den Sitzabstand verkleinern zu können.

In einer überdies vorteilhaften Ausgestaltung der Erfindung ist die Tischanbindungsstruktur an einer Drehachse angeordnet, die an der Stützstruktur der Rückenlehne verlaufen kann, oder an einer in der Nähe befindlichen Struktur gelagert ist. Auf diese Weise kann zunächst eine stabile Anordnung der Tischanbindungsstruktur mit Klapptisch geschaffen werden. Zum Beispiel dreht sich für eine verschwenkbare Anordnung der Tischanbindungsstruktur die Drehachse oder die Tischanbindungsstruktur ist drehbar an der Drehachse montiert. Zusätzlich ist es auch denkbar, dass der Klapptisch an einem Drehpunkt an der Tischanbindungsstruktur montiert ist, sodass der Klapptisch zumindest um eine Achse schwenkbar ist. Gegebenenfalls ist auch eine mehrachsige Schwenkfähigkeit möglich.

In einer außerdem vorteilhaften Ausgestaltung der Erfindung ist die Tischanbindungsstruktur innerhalb von Tragholmabschnitten der Stützstruktur für die Rückenlehne angeordnet. Insbesondere ist die Tischanbindungsstruktur innerhalb eines Zwischenraums zwischen, Tragholmabschnitten, zum Beispiel eines umlaufenden Tragholms in Breitenrichtung betrachtet, angeordnet. Damit wird es möglich, die Tischanbindungsstruktur und insbesondere auch den Klapptisch innerhalb der Tiefe der Tragholmabschnitte im eingeklappten Zustand zu versenken. Auf diese Weise wird die Stärke oder Tiefe der Rückenlehne durch die Tischanbindungsstruktur und insbesondere den Klapptischen nicht erhöht, sondern im Vergleich zu bekannten Ausgestaltungen verkleinert, womit gegebenenfalls die Komfortklasse verbessert werden kann.

Außerdem vorteilhaft ist es, wenn die Tischanbindungsstruktur an der Innenseite von Tragholmabschnitten der Stützstruktur für die Rückenlehne angeordnet ist. Damit können Tragholmabschnitte der Stützstruktur für die Anbindung der Tischanbindungsstruktur eingesetzt werden. Es ist nicht notwendig gegebenenfalls ein weiteres Strukturelement wie eine durchgehende Achse, die schwenkbar ist oder an der die Tischanbindungsstruktur schwenkbar ist, einzusetzen.

Darüber hinaus ist es bevorzugt, wenn die Tischanbindungsstruktur zwei Tischtragarme umfasst. Die Tischtragarme sind in Breitenrichtung gesehen vorzugsweise innerhalb eines freien Bereichs einer Holmstruktur der Stützstruktur der Rückenlehne angeordnet oder sogar in einem zentralen Bereich zwischen der Holmstruktur zusammengerückt.

Um eine einfache, kostengünstige und stabile Anbindung des Tisches zu erhalten, wird im Weiteren vorgeschlagen, die beiden Tischarme, die seitlich am Tisch angebunden sind, durch einen einzigen zentralen Tischanbindungsarm zu ersetzen, der dann insbesondere mittig an einer Tragstruktur, z.B. der Rückenlehnenstruktur angelenkt ist.

Eine Anordnung der Tischanbindungsstruktur im Bereich der Mitte des Fluggastsitzes ist insbesondere dann vorteilhaft, wenn ein einziger Tragarm oder eng zusammengerückte Tragarme zum Einsatz kommen. Dann lässt sich der Tragarm bzw. mehrere Tragarme so anordnen, dass sie zwischen den Beinen eines Fluggastes im ausgeklappten Zustand des Klapptisches positioniert werden, sodass die Bewegungsfreiheit seitlich der Beine durch die Tischanbindungsstruktur nicht beeinträchtigt ist. Der zentral und mittig angebundene Tisch erhöht damit den "living space" bei Reduzierung des Sitzabstandes, insbesondere im Bereich der Knie des Passagiers.

In einer überdies bevorzugten Ausgestaltung ist die Tischanbindungsstruktur im Bereich der Mitte der Rückenlehne angelenkt. Auf diese Weise können Strukturelemente der Rückenlehne für die Anbindung der Tischanbindungsstruktur, insbesondere die klappbare Anbindung, genutzt werden.

In einer überdies vorteilhaften Ausgestaltung der Erfindung ist der Klapptisch als auch die Tischanbindungsstruktur in der Tiefe der Rückenlehne versenkt. Damit steht kein Teil der Tischanbindungsstruktur mit Klapptisch von der Seite betrachtet über eine Projektion der Seitenflächen der Rückenlehne über.

In einer außerdem vorteilhaften Ausführungsform der Erfindung ist der Tisch an der Tischanbindungsstruktur mittig aufgenommen. Dadurch erhält man größere Gestaltungs- bzw. Designfreiheit in den seitlichen Bereichen des Tisches.

### Beschreibung der Ausführungsbeispiele

Mehrere Ausführungsbeispiele der Erfindung sind nachstehend in den Zeichnungen unter Angabe weiterer Einzelheiten und Vorteile näher erläutert.

Es zeigen:
- Figur 1: einen Fluggastsitz mit ausgeklapptem Klapptisch in einer Seitenansicht,
- Figur 2: den Fluggastsitz aus Figur 1 in einer Rückansicht mit eingeklapptem Klapptisch,
- Figur 3: den Sitz aus Figur 1 und 2 in perspektivischer Schrägansicht mit erfindungsgemäßem Klapptisch in eingeklappter Position,
- Figur 4: einen perspektivischen Ausschnitt des Fluggastsitzes entsprechend den Figuren 1 bis 3 in ausgeklapptem Zustand und
- Figur 5: einen weiteren Ausschnitt des Fluggastsitzes nach Figur 4 in räumlicher Darstellung mit einem schematisch angedeuteten Bein eines Fluggastes.

### Beschreibung der Ausführungsbeispiele

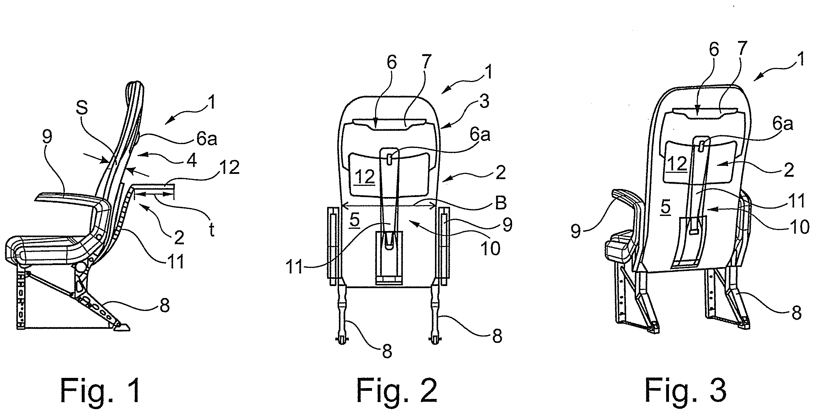

In den Figuren 1 bis 3 ist ein Fluggastsitz 1 dargestellt, wobei in den Figuren 2 und 3 eine Klapptischanordnung 2 in eingeklappter Position und in Figur 1 in ausgeklappter Position dargestellt ist.

Der Fluggastsitz 1 umfasst eine Rückenlehne 3 mit einer Rückseite 4. Die Rückenlehne 3 besitzt eine Rückenlehnenstruktur in Form eines vorzugsweise umlaufenden Holms (nicht dargestellt).

In den Figuren 2 und 3 ist eine Abdeckung 5 an den darunter liegenden Holmverlauf angepasst, sodass man die Form des darunterliegenden umlaufenden Holms nicht erkennen kann.

In einer Breite B der Rücklehne 3 betrachtet, liegen zum Beispiel Bereiche der Abdeckung tiefer, also zurückgesetzt bezogen auf eine Stärke S der Rückenlehne 3. Dieser zur Verfügung stehende Bereich der Rückenlehne wird zum Beispiel von einem Literaturfach 6 und der Klapptischanordnung 2 genutzt. Insbesondere die Klapptischanordnung 2 ist dabei vorzugsweise vollständig in der Stärke S der Rückenlehne versenkt.

Das heißt, in einer seitlichen Projektion, steht die Klapptischanordnung 2 nicht über. Das Einzige, was in der Figur 1 übersteht ist ein Verriegelungshebel 6a.

Durch diese Maßnahme lässt sich der Bereich über die Breite zwischen einer umlaufenden Holmstruktur der Rückenlehne vorteilhaft für die Klapptischanordnung 2 nutzen.

Zudem ist noch Platz für das Literaturfach 6 oberhalb der Klapptischanordnung 2 mit einer Eingreifmulde 7.

Der Fluggastsitz 1 verfügt des Weiteren über ein Gestell 8, an welchem die Rückenlehne 3 sowie Armlehne 9 montiert sind.

Die Klapptischanordnung 2 umfasst eine Tischanbindungsstruktur 10, die einen zentralen Holm 11, vorzugsweise in einer Breitenmitte der Rückenlehne 3 aufweist. Am zentralen Holm 11 ist einerseits die Tischanbindungsstruktur 10 schwenkbar an die Rückenlehne 3 angelenkt und andererseits ein Klapptisch 12 schwenkbar mit der Tischanbindungsstruktur 10 verbunden.

In den Figuren 2 und 3 ist der eingeklappte Zustand der Klapptischanordnung 2 dargestellt. Die Klapptischanordnung 2 wird in dieser Position durch den Verriegelungshebel 6a, der drehbar im Bereich des Literaturfachs 6 positioniert ist, gehalten.

Die Tischanbindungsstruktur 10 ist in einem unteren Bereich 3a der Rückenlehne 3 so angeordnet, dass der zentrale Holm 11 in einer Ausnehmung 13 an der Rückseite 4 der Rückenlehne im eingeklappten Zustand versenkt ist.

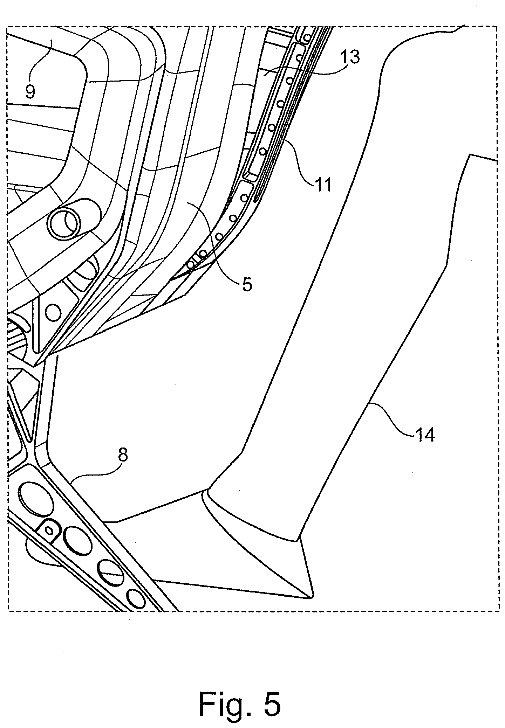

Die Ausnehmung 13 ist insbesondere in Figur 5 ersichtlich.

Je nach Ausgestaltung des Klapptisches 12, d.h. insbesondere seiner Tiefenausdehnung t kann z.B. ein Literaturfach größer oder kleiner ausfallen.

Denkbar ist auch, dass der Klapptisch 12 zum Beispiel einmal gefaltet ist, sodass nach dem Herausklappen des Klapptisches 12 dieser aufgeklappt werden kann, um ungefähr eine Tiefe t zu erreichen, wie sie in den Figuren 1 bis 3 abgebildet ist.

In einer kurzen Variante kann der Klapptisch 12 jedoch immer noch eingesetzt werden, um darauf zum Beispiel Getränkebehältnisse oder ein Glas abzustellen.

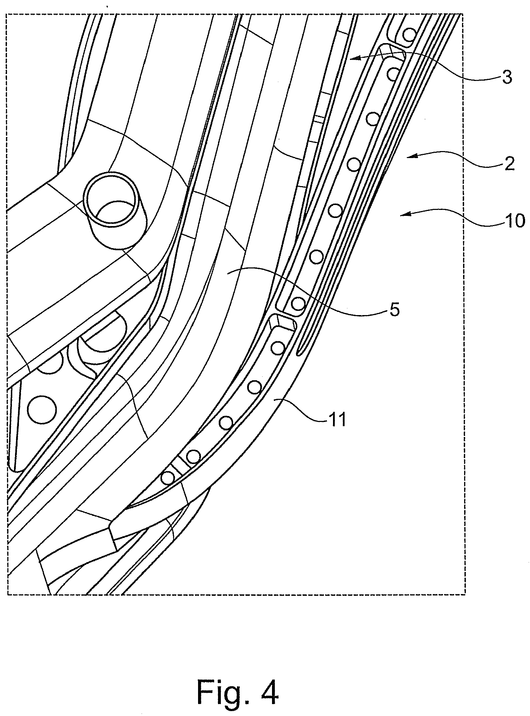

Figur 4 zeigt in einer perspektivischen Seitenansicht einen Ausschnitt der Rückenlehne 3 mit Abdeckung 5 und ausgeklappter Klapptischanordnung 2, wobei der zentrale Holm 11 von der Abdeckung 5 der Rückenlehne 3 weggekippt ist. Der zentrale Holm 11 ist in einem weggeklappten Zustand zwischen den Beinen eines Fluggastes positioniert, sodass die seitliche Bewegungsfreiheit, insbesondere der Knie selbst im ausgeklappten Zustand der Klapptischanordnung nicht beeinträchtigt wird.

Die Positionierung eines Beins 14 in Bezug zum zentralen Holm 11 in ausgeklappter Position der Klapptischanordnung 2 wird schematisch in Figur 5 gezeigt.

In den Figuren 4 und 5 ist auch ersichtlich, wie der zentrale Holm 11 aus der Ausnehmung 13 ausgeschwenkt ist, jedoch im unteren Bereich nach wie vor in die Ausnehmung 13 einläuft und dort insbesondere über eine Achse schwenkbar gehalten ist. Im eingeklappten Zustand ist der zentrale Holm 11 vorzugsweise vollständig in der Ausnehmung 13 versenkt. Der Bereich der Rückseite 4 der Rückenlehne 3 kann sich an der Position des eingeklappten zentralen Holms von der Rückseite 4 "erheben" und/oder die seitlichen Bereiche an der Ausnehmung sind nach innen abgesenkt jedoch vorzugsweise so, dass nach wie vor im eingeklappten Zustand der zentrale Holm vollständig versenkt ist. Insbesondere wenn die seitlichen Bereiche an der Ausnehmung nach innen abgesenkt sind, entsteht mehr Beinfreiheit für einen Fluggast. Der erhabene Bereich der Rückenlehne, in dem der zentrale Holm versenkbar ist, bildet mit dem zentralen Holm 11 vorzugsweise eine Erhebung mit "weichen", schräg anlaufenden Kanten, sodass eine Person sich daran nicht anstoßen oder gar verletzen kann.

### Bezugszeichenliste:

- 1: Fluggastsitz
- 2: Klapptischanordnung
- 3: Rückenlehne
- 3a: unterer Bereich
- 4: Rückseite
- 5: Abdeckung
- 6: Literaturfach
- 6a: Verrieglungshebel
- 7: Eingreifmulde
- 8: Gestell
- 9: Armlehne
- 10: Tischanbindungsstruktur
- 11: zentraler Holm
- 12: Klapptisch
- 13: Ausnehmung
- 14: Bein

## Patentansprüche

1. Fluggastsitz (1) mit einem Sitzboden und einer Rückenlehne (3), die eine Stützstruktur einschließlich einer Holmstruktur aufweist sowie einem Gestell (8), das zur Befestigung an einem Boden einer Flugkabine vorgesehen ist und mit einen Klapptisch (12), der mit einer Tischanbindungsstruktur (10) klappbar am Fluggastsitz (1) angeordnet ist, **dadurch gekennzeichnet, dass** die Tischanbindungsstruktur (10) in Breitenrichtung gesehen im Bereich der Mitte des Fluggastsitzes in einem zentralen Bereich innerhalb einer Breite (B) der Rückenlehne (3) zwischen einer Holmstruktur der Stützstruktur angeordnet ist.

2. Fluggastsitz nach Anspruch 1, **dadurch gekennzeichnet, dass** die Tischanbindungsstruktur (10) innerhalb der Tiefe S der Rückenlehne (3) angeordnet ist.

3. Fluggastsitz nach einem der vorhergehenden Ansprüche, **dadurch gekennzeichnet, dass** die Tischanbindungsstruktur (10) an einer Drehachse angeordnet ist, die an der Stützstruktur der Rückenlehne (3) verläuft.

4. Fluggastsitz nach einem der vorhergehenden Ansprüche, **dadurch gekennzeichnet, dass** die Tischanbindungsstruktur (10) innerhalb einer Breite von Tragholmabschnitten der Stützstruktur für die Rückenlehne angeordnet ist.

5. Fluggastsitz nach einem der vorhergehenden Ansprüche, **dadurch gekennzeichnet, dass** die Tischanbindungsstruktur (10) an einer Innenseite von Tragholmabschnitten der Stützstruktur für die Rückenlehne angeordnet ist.

6. Fluggastsitz nach einem der vorhergehenden Ansprüche, **dadurch gekennzeichnet, dass** die Tischanbindungsstruktur (10) zwei Tischtragarme umfasst.

7. Fluggastsitz nach einem der vorhergehenden Ansprüche, **dadurch gekennzeichnet, dass** die Tischanbindungsstruktur (10) einen einzigen Tragarm aufweist (11).

8. Fluggastsitz nach einem der vorhergehenden Ansprüche, **dadurch gekennzeichnet, dass** der Tisch (12) in der Tiefe der Rückenlehne versenkbar ist.

9. Fluggastsitz nach einem der vorhergehenden Ansprüche, **dadurch gekennzeichnet, dass** der Tisch (12) an der Tischanbindungsstruktur (10) mittig aufgenommen ist.

## Claims

1. Aircraft passenger seat (1) comprising a seat base and a backrest (3) which comprises a support structure including a strut structure, and a frame (8) that is provided for securing to a floor of an aircraft cabin, and a folding table (12) which is arranged with a table connecting structure (10) so as to be able to be folded on the aircraft passenger seat (1), **characterised in that** the table connecting structure (10) is arranged as viewed in width direction in the area of the centre of the aircraft passenger seat in a central area within a width (B) of the backrest (3) between a strut structure of the support structure.

2. Aircraft passenger seat according to claim 1, **characterised in that** the table connecting structure (10) is arranged within the depth S of the backrest (3).

3. Aircraft passenger seat according to any of the preceding claims, **characterised in that** the table connecting structure (10) is arranged on a rotational axle which extends on the support structure of the backrest (3).

4. Aircraft passenger seat according to any of the preceding claims, **characterised in that** the table connecting structure (10) is arranged within a width of carrier strut portions of the support structure for the backrest.

5. Aircraft passenger seat according to any of the preceding claims, **characterised in that** the table connecting structure (10) is arranged on an inner side of carrier strut portions of the support structure for the backrest.

6. Aircraft passenger seat according to any of the preceding claims, **characterised in that** the table connecting structure (10) comprises two table carrier arms.

7. Aircraft passenger seat according to any of the preceding claims, **characterised in that** the table connecting structure (10) has a single carrier arm (11).

8. Aircraft passenger seat according to any of the preceding claims, **characterised in that** the table (12) can be recessed within the depth of the backrest.

9. Aircraft passenger seat according to any of the preceding claims, **characterised in that** the table (12) is mounted centrally on the table connecting structure (10).

## Revendications

1. Siège de passager d'avion (1) comprenant une base d'assise et un dossier (3) comprenant une structure de support, y compris une structure en barre, ainsi qu'une armature (8) prévue pour la fixation à un plancher d'une cabine d'avion, et comprenant une table rabattable (12) disposée rabattable sur le siège de passage d'avion (1) avec une structure de raccordement de table (10), **caractérisé en ce que** la structure de raccordement de table (10) est disposée, considérée dans la direction de la largeur, dans la région du milieu du siège de passager d'avion dans une région centrale à l'intérieur d'une largeur (B) du dossier (3) entre une structure en barre de la structure d'appui.

2. Siège de passager d'avion selon la revendication 1, **caractérisé en ce que** la structure de raccordement de table (10) est disposée à l'intérieur de la profondeur (S) du dossier (3).

3. Siège de passager d'avion selon l'une des revendications précédentes, **caractérisé en ce que** la structure de raccordement de table (10) est disposée sur un axe de rotation qui s'étend sur la structure d'appui du dossier (3).

4. Siège de passager d'avion selon l'une des revendications précédentes, **caractérisé en ce que** la structure de raccordement de table (10) est disposée à l'intérieur d'une largeur de parties de montants support de la structure d'appui pour le dossier.

5. Siège de passager d'avion selon l'une des revendications précédentes, **caractérisé en ce que** la structure de raccordement de table (10) est disposée sur un côté intérieur de parties de montant support de la structure d'appui pour le dossier.

6. Siège de passager d'avion selon l'une des revendications précédentes, **caractérisé en ce que** la structure de raccordement de table (10) comprend deux bras de support de table.

7. Siège de passager d'avion selon l'une des revendications précédentes, **caractérisé en ce que** la structure de raccordement de table (10) comprend un unique bras de support (11).

8. Siège de passager d'avion selon l'une des revendications précédentes, **caractérisé en ce que** la table (12) peut être escamotée dans la profondeur du dossier.

9. Siège de passager d'avion selon l'une des revendications précédentes, **caractérisé en ce que** la table (12) est reçue de manière centrale sur la structure de raccordement de table (10).
